# EUROPÄISCHE PATENTSCHRIFT

(11) **EP 0 733 839 B1**
(45) Veröffentlichungstag und Bekanntmachung des Hinweises auf die Patenterteilung: **15.12.1999**
(21) Anmeldenummer: 96103627.4
(22) Anmeldetag: 08.03.1996
(51) Int. Cl.: F16K 31/60, F16K 27/04

(54) **Mischventil mit einem Handhebel**
Mixing valve with a handle
Mitigeur avec un levier

(30) Priorität: 24.03.1995 DE 19510906
(43) Veröffentlichungstag der Anmeldung: 25.09.1996
(73) Patentinhaber: FRIEDRICH GROHE AKTIENGESELLSCHAFT, D-58675 Hemer (DE)
(72) Erfinder: Heimann, Bruno, 58730 Fröndenberg (DE); Bischoff, Bernd, 58675 Hemer (DE); Keiter, Kerstin, 58708 Menden (DE)

(56) Entgegenhaltungen:
- EP-A- 0 195 999
- DE-A- 3 103 891
- FR-A- 2 470 319

## Beschreibung

Die Erfindung betrifft ein Mischventil, bestehend aus einem Armaturenkörper und einer die Ventilglieder enthaltenden, vom Armaturenkörper aufgenommenen Ventilkartusche, mit einem an einem Stellhebel befestigbaren Handhebel zur Betätigung eines in zwei Freiheitsgraden bewegbaren Ventilglieds zur separaten Bestimmung des Mischungsverhältnisses und der Gesamtdurchflußmenge, wobei der mit dem Ventilglied verbundene, um zwei senkrecht zueinander in der Ventilkartusche angeordneten Drehachsen verschwenkbare Handhebel seitlich aus dem Mantelbereich einer um die erste Drehachse drehbar am Armaturenkörper und bezüglich der Ventilkartusche geführt gehalterten Hülse eines Hebelkopfgehäuses drehgekoppelt herausgeführt ist.

Ein Mischventil dieser Gattung ist aus der europäischen Patentschrift Veröffentlichungsnummer 0 140 275 B1 bekannt. Das Hebelkopfgehäuse ist hierbei zweiteilig ausgebildet und besteht aus einer Mantelhülse und einer Abdeckkappe. Zur Halterung und Führung des Hebelkopfgehäuses ist außerdem eine in eine Aufnahmebohrung am Armaturenkörper einschraubbare Buchse erforderlich.
Ferner ist aus der europäischen Patentanmeldung EP-A-0 195999 ein Mischventil bekannt, bei dem das Hebelkopfgehäuse an einem Halsteil der Ventilkartusche befestigt ist.

Der Erfindung liegt die Aufgabe zugrunde, das im Oberbegriff des Anspruchs 1 angegebene Mischventil insbesondere bezüglich des Hebelkopfgehäuses zu verbessern.

Diese Aufgabe wird mit einem Mischventil mit den im Anspruch 1 angegebenen Merkmalen gelöst.
Weitere Ausgestaltungen der Erfindung sind in den Ansprüchen 2 bis 15 angegeben.

Mit diesen Maßnahmen ist erreichbar, daß das Hebelkopfgehäuse als einstückige, kappenartige Hülse ausgebildet werden kann. Hierbei kann die Hülse kostengünstig aus gefärbtem Kunststoff hergestellt werden, wobei auch günstig Dekorbeschichtungen auf die Außenfläche aufbringbar sind.

Ein Ausführungsbeispiel der Erfindung ist in der Zeichnung dargestellt und wird im folgenden näher beschrieben. Es zeigt
- Figur 1: ein Mischventil in Form einer Spültischwasserauslaufarmatur mit herausziehbarem Handbrausenauslauf;
- Figur 2: einen Teil des in Figur 1 gezeigten Mischventils in vergrößerter Darstellung im Längsschnitt;
- Figur 3: einen Teil des in Figur 2 gezeigten Armaturenkörpers um 90° gedreht;

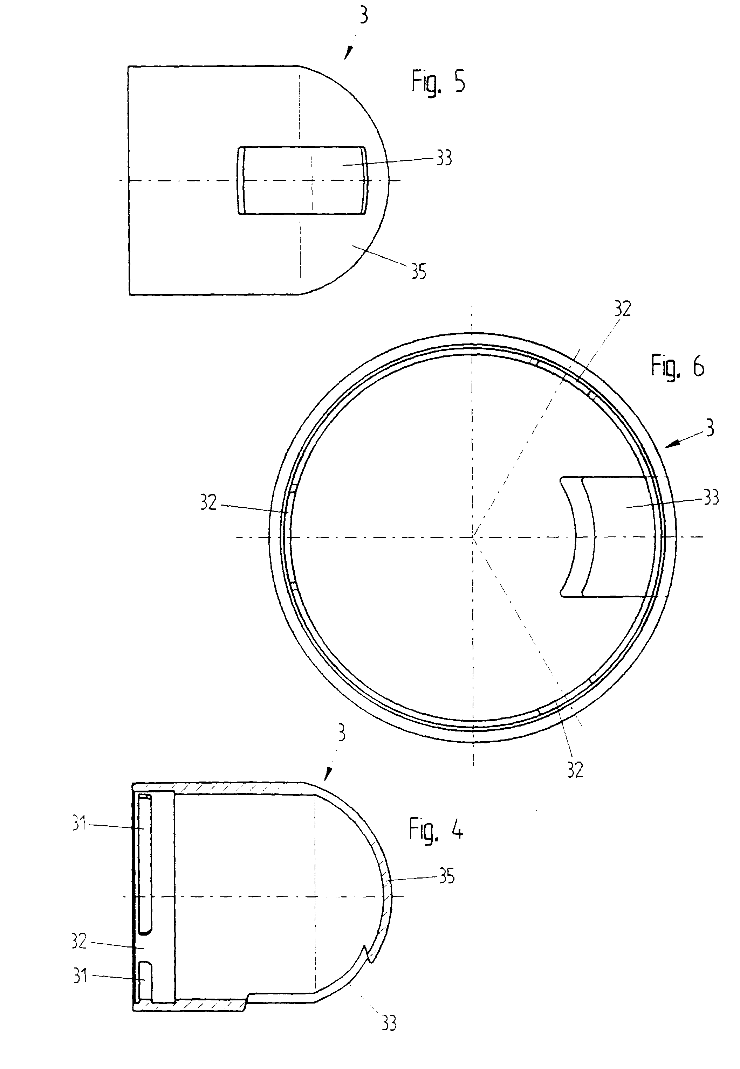

- Figur 4: die in Figur 1 gezeigte Hülse des Hebelkopfgehäuses im Längsschnitt;
- Figur 5: die in Figur 4 gezeigte Hülse um 90° gedreht in Seitenansicht;
- Figur 6: die in Figur 5 gezeigte Hülse in Draufsicht in vergrößerter Darstellung;
- Figur 7: das in Figur 2 gezeigte Ringelement in Seitenansicht;
- Figur 8: das in Figur 7 gezeigte Ringelement in Halbansicht von oben;
- Figur 9: das in Figur 7 gezeigte Ringelement in Halbansicht von unten.

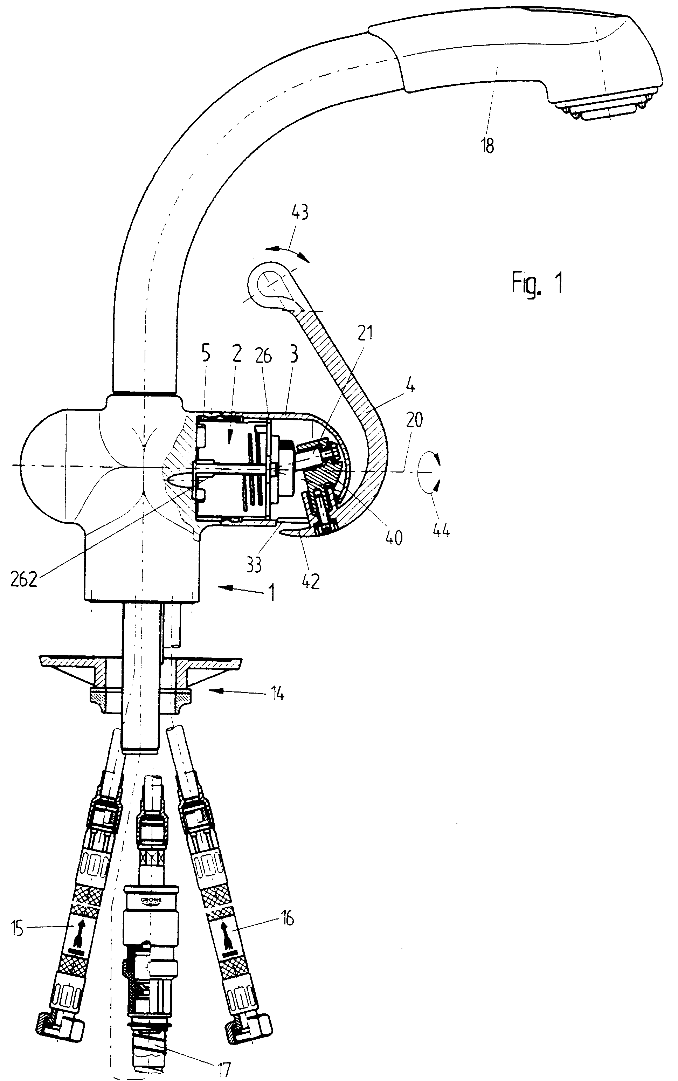

Die in Figur 1 gezeigte Auslaufarmatur ist insbesondere für den Einsatz an Spültischen gedacht und besteht aus einem Armaturenkörper 1, einer Ventilkartusche 2, einer Hülse 3 als Hebelkopfgehäuse und einem Handhebel 4.

Der Armaturenkörper 1 ist dabei so ausgebildet, daß er an einem Spültisch (in der Zeichnung nicht dargestellt) in einer Öffnung mit einer Befestigungseinrichtung 14 befestigbar ist. Durch die Öffnung in dem Waschtisch werden außerdem die Zuflußleitungen 15,16 für Kalt- und Warmwasser sowie die Mischwasserauslaßleitung 17, die das in der Ventilkartusche 2 erzeugte Mischwasser einem als herausziehbare Handbrause 18 ausgebildeten Auslauf zuführt, durchgeleitet.

In der Ventilkartusche 2 ist ein Bodenteil 22 angeordnet, in dem Zuflußöffnungen für Kalt- und Warmwasser sowie eine Abflußöffnung für Mischwasser ausgebildet sind. An dem Bodenteil 22 ist eine ortsfest gehaltene Ventilsitzscheibe 23 mit entsprechenden Durchtrittsöffnungen angelagert. An der gegenüberliegenden Stirnseite der Ventilsitzscheibe 23 ist eine Steuerscheibe 24 mit einer Abdeckhaube 25 in zwei Freiheitsgraden verschiebbar angelagert. In der Steuerscheibe 24 ist ein Durchbruch ausgebildet, der an der einen Seite von der Abdeckhaube 25 verschlossen ist, so daß die drei Durchtrittsöffnungen in der Ventilsitzscheibe 23 wahlweise über den Durchbruch miteinander verbunden werden können.

Zur Bewegung der Steuerscheibe 24 ist in dem Gehäuse der Ventilkartusche 2 ein Drehring 27 angeordnet, an dem stirnseitig die Abdeckhaube 25 abgestützt ist. In dem Drehring 27 ist außerdem ein Stellhebel 21 mit einer senkrecht zur Mittelachse 20 angeordneten Schwenk- oder Drehachse 200 vorgesehen. Der Stellhebel 21 greift mit einem am inneren Hebelarm ausgebildeten Querstift 210 in eine gabelförmige Aufnahme der Abdeckhaube 25 ein. Am äußeren Hebelarm ist ein Winkelstück 40 mit einer Befestigungsschraube 401 in der Stecklage gesichert befestigt. Um 90° gedreht zur ersten Befestigung ist der Handhebel 4 mit einem Ansatz 41, ebenfalls mit einer Befestigungsschraube 411 in der Stecklage gesichert, befestigt.

Wird nun mit dem Handhebel 4 der Stellhebel 21 um seine Drehachse 200 verschwenkt, so wird die Steuerscheibe 24 zusammen mit der Abdeckhaube 25 radial zur Ventilsitzscheibe 23 verschoben, wodurch die Gesamtwasserdurchflußmenge einstellbar ist. Wird dagegen der Stellhebel 21 mit dem Handhebel 4 um die Mittelachse 20 gedreht, so wird entsprechend die Steuerscheibe 24 mit der Abdeckhaube 25 zur Ventilsitzscheibe 23 gedreht, wodurch das Mischungsverhältnis des zufließenden Kalt- und Warmwassers bzw. die Mischwassertemperatur des abgegebenen Wassers einstellbar ist.

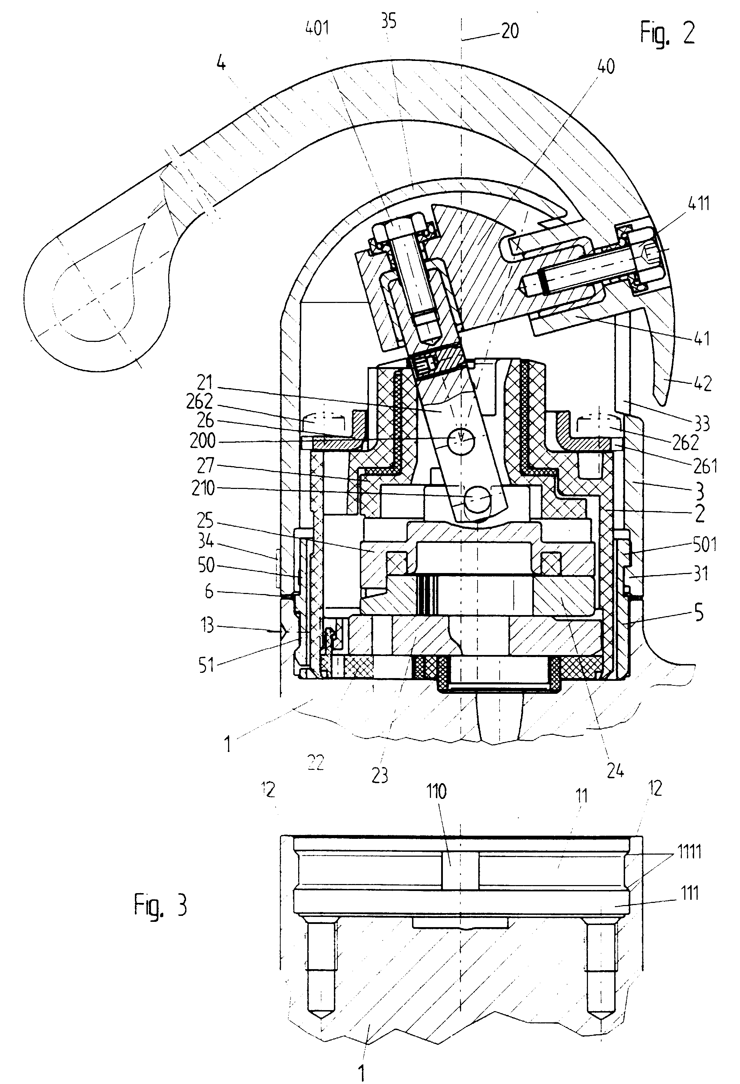

Die Ventilkartusche 2 weist ein etwa zylindrisches Gehäuse auf, welches mit Hilfe eines Druckrings 26 und zwei diametral gegenüberliegend angeordneten Spannschrauben 262 (in der Zeichnung in Figur 2 um 90° gedreht eingezeichnet) gegen den Grund einer Aufnahmebohrung 11 des Armaturenkörpers 1 verspannbar ist, wobei die in der Ventilsitzscheibe 23 ausgebildeten separaten Durchtrittsöffnungen über im Bodenteil 22 gestützten Schlauchdichtungen mit den entsprechenden Kanälen im Armaturenkörper 1 verbunden sind.

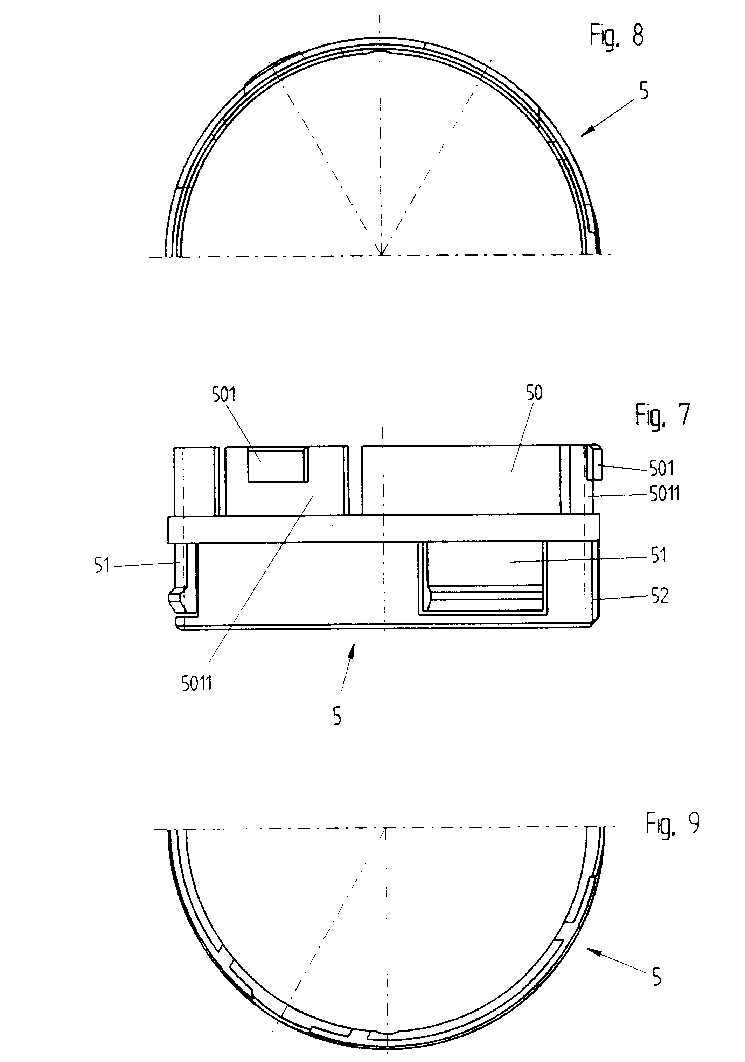

Zur Verkleidung der aus der Aufnahmebohrung 11 vorstehenden Ventilkartusche 2 und dem Stellhebel 21 mit dem Winkelstück 40 ist auf dem Mantelbereich der Ventilkartusche 2 eine Hülse 3 drehbar aber axial festliegend vorgesehen. Zu diesem Zweck ist ein Ringelement 5, wie es insbesondere in Figur 7 bis 9 in der Zeichnung dargestellt ist, angeordnet. Die Aufnahmebohrung 11 weist dabei im Grund eine umlaufende Ringnut 111 sowie eine parallel zur Mittelachse liegende Paßfedernut 110 auf, wie es insbesondere aus Figur 3 zu entnehmen ist. In die Aufnahmebohrung 11 kann nun, bevor die Ventilkartusche 2 eingesetzt ist, das Ringelement 5 mit seiner Paßfeder 52 und den federnden Zungen 51 axial eingeschoben und verrastet werden. In der Stecklage ist somit über die Paßfeder 52 und die Paßfedernut 110 das Ringelement 5 drehfest gehalten. Beim Einschiebvorgang federn die Zungen 51 radial aus und schnappen nach dem Erreichen der umlaufenden Ringnut 111 in diese ein und sichern somit das Ringelement 5 axial in der Stecklage. Damit das Einschieben und Herausziehen bzw. ein radiales Auslenken der federnden Zungen 51 ermöglicht wird, sind die Stirnkanten an der Aufnahmebohrung bzw. in der Ringnut 111 mit einer um 45° geneigten Fase 1111 versehen. Nach dem Einbringen des Ringelements 5 steht dieses mit einem Kragen 50 aus der Aufnahmebohrung 11 axial vor. Von diesem Kragen 50 wird die Hülse 3 mit einer Bajonettverbindung aufgenommen. Hierzu sind symmetrisch an dem Innenmantel der Hülse 3 radial nach innen vorspringende Ringsegmente 31 ausgebildet. Zwischen den Ringsegmenten 31 befinden sich drei symmetrisch angeordnete Freiräume 32, deren Breite geringfügig größer als die Breite von am Kragen 50 radial nach außen vorstehenden Knaggen 501 ist. Die Hülse 3 kann somit bajonettartig axial auf den Kragen 50 aufgeschoben und in der Stecklage verdreht werden, so daß danach eine axiale Sicherung erfolgt. Vorzugsweise sind hierbei eine Knagge 501 und ein Freiraum 32 etwas breiter ausgelegt als die anderen beiden, so daß die Hülse 3 nur in einer Drehstellung auf das Ringelement 5 aufbringbar ist, wobei die Ringsegmente 31 so ausgebildet sind, daß nach der Stecklage die Hülse 3 um 180° gedreht wird, wonach in dieser Drehlage die Hülse 3 über den gesamten Drehbereich von 90° des Stellhebels 21 in der Ventilkartusche 2 zur Einstellung des Mischungsverhältnisses axial gesichert ist. Damit die Hülse 3 relativ spielfrei radial auf dem Kragen 50 geführt wird, sind außerdem die Knaggen 501 an federnden Zungen 5011 angeformt, derart, daß sie federnd an die Innenwandung der Hülse 3 gedrückt werden, wobei zur glatten Anlage die Außenfläche der Knaggen 501 ballig ausgebildet ist. Außerdem wird das Ringelement 5 von den federnden Zungen 51, die an der Fase 1111 federnd anliegen, axial gegen eine umlaufende Stirnkante 12 des Armaturenkörpers 1 gestrammt. Um eine reibungsarme Drehverbindung zu ermöglichen, ist das Ringelement 5 aus gut gleitfähigem Kunststoff hergestellt. Im Anlagebereich an der Stirnkante 12 und der Hülse 3 ist ein Gleitring 6 zwischengelagert, so daß ein Eindringen von Schmutz oder Flüssigkeit an der Übergangsstelle vom Armaturenkörper 1 zur Hülse 3 weitgehend ausgeschlossen ist. Darüber hinaus ist zur Stützung der Drehlagerung der Druckring 26 mit radial vorstehenden Drehführungen 261 versehen, an denen die Innenseite der Hülse 3 gleitend anliegt.

Die von dem Armaturenkörper 1 abgekehrt liegende Stirnseite der Hülse 3 ist mit einer halbkugelförmigen Wölbung 35 verschlossen, wobei in dem nach unten zeigenden Schlitz 33 der Handhebel 4 mit seinem Ansatz 41 an dem Winkelstück 40 befestigt ist, wie es insbesondere aus Figur 1 und 2 zu entnehmen ist. Der Schlitz 33 ist dabei so dimensioniert, daß der Ansatz 41 bei einer Drehbewegung des Handhebels 4 um die Mittelachse 20 die Hülse 3 auf dem Ringelement 5 und der Ventilkartusche 2 mitdreht. Die axiale Länge des Schlitzes 33 ist so bemessen, daß der Handhebel 4 zur Mengenregulierung um die Drehachse 200 im Rahmen der in der Ventilkartusche 2 vorgegebenen Anschläge bewegbar ist. Zur weiteren Abdeckung des Schlitzes 33 weist der Handhebel 4 einen Vorsprung 42 auf, so daß es auch weitgehend ausgeschlossen ist, daß Spritzwasser von unten in die Hülse 3 eindringen kann.

Damit das Ringelement 5 sich nicht unbeabsichtigt aus der Stecklage im Armaturenkörper 1 lösen kann, ist es so dimensioniert, daß bei eingesetzter Ventilkartusche 2 die Zungen 51 verriegelt werden, d.h. die Zungen 51 können nicht mehr völlig aus der Ringnut 111 ausgelenkt werden, wie es aus Figur 2 zu entnehmen ist.

Durch eine Bewegung des Handhebels 4 in Richtung eines Pfeils 43 (Figur 1) kann somit die Wasserausflußmenge feinfühlig eingestellt werden.

Mit einer Bewegung des Handhebels 4 in Richtung eines Pfeils 44 (Figur 1) kann das Mischungsverhältnis bzw. die Temperatur des abgegebenen Mischwassers bestimmt werden. Hierbei dreht sich die Hülse 3 entsprechend mit. Zur Anzeige des Mischungsverhältnisses bzw. der Mischwassertemperatur ist auf der Hülse 3 im Bereich des Armaturenkörpers 1 eine Skala 34 angeordnet, die mit einer auf dem Armaturenkörper 1 vorgesehenen Marke 13 zusammenwirkt.

Anstatt eines gesonderten Ringelements kann selbstverständlich auch die Hülse unmittelbar bajonettartig mit dem Armaturenkörper verbunden sein. Alternativ kann auch die Hülse unmittelbar auf der Ventilkartusche drehbar angeordnet sein. Auch kann an der Ventilkartusche ein entsprechender Kragen zur Halterung der Hülse vorgesehen werden.

## Patentansprüche

1. Mischventil, bestehend aus einem Armaturenkörper (1) und einer die Ventilglieder enthaltenden, vom Armaturenkörper (1) aufgenommenen Ventilkartusche (2), mit einem an einem Stellhebel (21,40) befestigbaren Handhebel (4) zur Betätigung eines in zwei Freiheitsgraden bewegbaren Ventilglieds zur separaten Bestimmung des Mischungsverhältnisses und der Gesamtdurchflußmenge, wobei der mit dem bewegbaren Ventilglied verbundene, um zwei senkrecht zueinander in der Ventilkartusche (2) angeordneten Drehachsen (20, 200) verschwenkbare Handhebel (4) seitlich aus dem Mantelbereich einer um die erste Drehachse (20) drehbar am Armaturenkörper (1) und bezüglich der Ventilkartusche (2) geführt gehalterten Hülse (3) eines Hebelkopfgehäuses drehgekoppelt herausgeführt ist, dadurch gekennzeichnet, daß die Hülse (3) einstückig ausgebildet ist und am Armaturenkörper (1) mit einer Stirnseite anliegt oder letzteren übergreift oder in ihn hineingreift, während ihre gegenüberliegende Stirnseite im wesentlichen verschlossen ausgebildet ist, wobei zur axialen Sicherung der Hülse (3) in der Einbaulage Rastmittel an dem Armaturenkörper (1) vorgesehen sind, auf die die Hülse (3) in einer bestimmten Drehstellung axial aufsteckbar und nach einer Drehung in der Stecklage in eine Position, in der der Handhebel (4) durch einen Schlitz (33) in der Hülse (3) an dem Stellhebel (21,40) befestigbar ist, über den gesamten, mit dem Handhebel (4) einstellbaren Schwenkbereich zur Mischwassereinstellung axial festliegend gehalten ist.

2. Mischventil nach Anspruch 1, dadurch gekennzeichnet, daß als Rastmittel eine Bajonettverbindung vorgesehen ist, wobei an einem Kragen (50) am Armaturenkörper (1) radial nach außen vorspringende Knaggen (501) und an der Hülse (3) entsprechend radial nach innen vorstehende Ringsegmente (31) ausgebildet sind, die für die Knaggen (501) entsprechende Freiräume (32) aufweisen, so daß die Hülse (3) auf den Kragen (50) aufsteckbar und durch Drehung axial in der Stecklage fixierbar ist, wobei der Schlitz (33) in der Hülse (3) für die Durchführung des Handhebels (4) so positioniert ist, daß die Hülse (3) bei eingesetztem Handhebel (4) im gesamten Schwenkbereich von der Bajonettverbindung axial gehalten ist.

3. Mischventil nach Anspruch 2, dadurch gekennzeichnet, daß der Schlitz (33) so positioniert ist, daß die Hülse (3) nach dem Aufstecken um 180° zu drehen ist, um den Handhebel (4) mit der Ventilkartusche (2) zu verbinden.

4. Mischventil nach Anspruch 2 oder 3, dadurch gekennzeichnet, daß der Kragen (50) an einem Ringelement (5) ausgebildet ist, welches an dem Armaturenkörper (1) befestigbar ist.

5. Mischventil nach Anspruch 4, dadurch gekennzeichnet, daß das Ringelement (5) in einer Aufnahmebohrung (11) des Armaturenkörpers (1) mit einer Paßfeder (52) drehfest gehalten ist, wobei an dem Ringelement (5) federnde Zungen (51) ausgebildet sind, die in der Stecklage in eine Ringnut (111) in der Aufnahmebohrung (11) einfassen und das Ringelement (5) in der Stecklage sichern.

6. Mischventil nach Anspruch 5, dadurch gekennzeichnet, daß die Ringnut (111) eine Fase (1111) von etwa 45° aufweist und die federnden Zungen (51) so ausgebildet sind, daß das Ringelement (5) mit den Ringsegmenten (31) die Hülse (3) federnd gegen eine umlaufende Stirnkante (12) am Armaturenkörper (1) zur dichten Anlage drückt.

7. Mischventil nach Anspruch 5 oder 6, dadurch gekennzeichnet, daß koaxial zum Ringelement (5) in der Aufnahmebohrung (11) die Ventilkartusche (2) angeordnet ist, wobei das Ringelement (5) so dimensioniert ist, daß nach dem Einstecken des Ringelements (5) und dem anschließenden Einbringen der Ventilkartusche (2) die federnden Zungen (51) vom Außenmantel der Ventilkartusche (2) in ihrer Raststellung verriegelt sind.

8. Mischventil nach Anspruch 2 bis 7, dadurch gekennzeichnet, daß die Knaggen (501) ebenfalls an federnden Zungen (5011) angeordnet und derart dimensioniert sind, daß sie in der Stecklage federnd an die Innenwandung der Hülse (3) gestrammt sind.

9. Mischventil nach einem der Ansprüche 2 bis 8, dadurch gekennzeichnet, daß drei symmetrisch angeordnete Knaggen (501) vorgesehen sind, wobei die Knaggen (501) aus gut gleitfähigem Material hergestellt und an der äußeren Mantelfläche ballig zur reibungsarmen Anlage an der Hülse (3) ausgebildet sind.

10. Mischventil nach einem der Ansprüche 1 bis 9, dadurch gekennzeichnet, daß an dem aus der Ventilkartusche (2) herausgeführten Stellhebel (21) ein von der Hülse (3) umfaßbares Winkelstück (40) befestigt ist, an dem der Handhebel (4) mit einem Ansatz (41) befestigt ist, wobei der Ansatz (41) so bemessen ist, daß die Hülse (3) über den Schlitz (33) bei einer Drehbewegung um die Mittelachse (20) der Ventilkartusche (2) mitgenommen wird.

11. Mischventil nach einem der Ansprüche 1 bis 10, dadurch gekennzeichnet, daß der Schlitz (33) in der Hülse (3) in seiner Länge so bemessen ist, daß eine erforderliche Schwenkbewegung um die senkrecht zur Mittelachse (20) angeordnete zweite Drehachse (200) zur Öffnung und Schließung der Ventilkartusche (2) ermöglicht ist, wobei im Bereich des Schlitzes (33) der Handhebel (4) einen oder mehrere Vorsprünge (42) zur Abdeckung des Schlitzes (33) hat.

12. Mischventil nach einem der Ansprüche 1 bis 11, dadurch gekennzeichnet, daß die Hülse (3) auf der äußeren Mantelfläche eine Skala (34) zur Anzeige des eingestellten Mischungsverhältnisses hat.

13. Mischventil nach einem der Ansprüche 1 bis 12, dadurch gekennzeichnet, daß zwischen der Stirnseite der Hülse (3) und der Stirnkante (12) des Armaturenkörpers (1) ein Gleitring (6) angeordnet ist.

14. Mischventil nach einem der Ansprüche 1 bis 13, dadurch gekennzeichnet, daß die Ventilkartusche (2) mit einem Druckring (26) gegen den Armaturenkörper (1) gedrückt ist, wobei der Druckring (26) mit seinem Außenmantel eine oder mehrere Drehführungen (261) für die Hülse (3) bildet.

15. Mischventil nach einem der Ansprüche 1 bis 14, dadurch gekennzeichnet, daß die Hülse (3) aus Kunststoff hergestellt und an der von dem Armaturenkörper (1) abgekehrten Stirnseite des zylindrischen Mantelbereichs mit einer halbkugelförmigen Wölbung (35) verschlossen ausgebildet ist.

## Claims

1. Mixing valve, comprising a fitting body (1) and a valve cartridge (2) received by the fitting body (1) and containing the valve members, with a hand lever (4), securable to an adjusting lever (21, 40), for operating a valve member movable in two degrees of freedom for determining separately the mixing ratio and the total amount of throughflow, wherein the hand lever (4) that is connected to the movable valve member and is pivotable about two axes of rotation (20, 200) arranged at right angles to one another in the valve cartridge (2) is guided laterally, rotatably coupled, out of the casing region of a sleeve (3) of a lever head housing, which sleeve is mounted on the fitting body (1) so that it is rotatable about the first axis of rotation (20) and so that it is guided relative to the valve cartridge (2), characterised in that the sleeve (3) is of one-piece construction and lies with one end against the fitting body (1) or engages over the latter or engages in it, whilst its opposite end is of essentially closed construction, wherein, to secure the sleeve (3) axially in the fitted position, locking means are provided on the fitting body (1), onto which locking means the sleeve (3) is capable of being located axially in a specific rotated position, and, after rotation in the mounting position into a position in which the hand lever (4) is securable to the adjusting lever (21, 40) through a slot (33) in the sleeve (3), is retained such that it is axially fixed over the entire swivel range for adjusting the mixed water, the swivel range being adjustable by means of the hand lever (4).

2. Mixing valve according to claim 1, characterised in that, as locking means, there is provided a bayonet coupling, wherein on a collar (50) on the fitting body (1) there are formed radially outwardly projecting studs (501) and on the sleeve (3) there are formed correspondingly radially inwardly projecting annular segments (31) that have corresponding spaces (32) for the studs (501), so that the sleeve (3) can be placed on the collar (50) and by rotation can be secured axially in the mounting position, wherein the slot (33) in the sleeve (3) through which the hand lever (4) passes is so positioned that, with the hand lever (4) inserted, the sleeve (3) is held axially by the bayonet coupling over the entire swivel range.

3. Mixing valve according to claim 2, characterised in that the slot (33) is so positioned that, after the sleeve (3) has been put on, the sleeve (3) is rotatable through 180° in order to connect the hand lever (4) to the valve cartridge (2).

4. Mixing valve according to claim 2 or 3, characterised in that the collar (50) is formed on an annular element (5) that is capable of being fixed to the fitting body (1).

5. Mixing valve according to claim 4, characterised in that the annular element (5) is held non-rotatably by means of a spline (52) in a receiving bore (11) of the fitting body (1), wherein on the annular element (5) there are formed resilient tongues (51) that in the mounting position engage in an annular groove (111) in the receiving bore (11) and secure the annular element (5) in the mounting position.

6. Mixing valve according to claim 5, characterised in that the annular groove (111) has a chamfer (1111) of about 45° and the resilient tongues (51) are so constructed that the annular element (5) by means of the annular segments (31) presses the sleeve (3) resiliently against a circumferential end edge (12) on the fitting body (1) for seal-forming engagement.

7. Mixing valve according to claim 5 or 6, characterised in that the valve cartridge (2) is arranged coaxially with respect to the annular element (5) in the receiving bore (11), wherein the dimensions of the annular element (5) are such that, after insertion of the annular element (5) and subsequent mounting of the valve cartridge (2), the resilient tongues (51) are locked in their locking position by the outer casing of the valve cartridge (2).

8. Mixing valve according to claims 2 to 7, characterised in that the studs (501) are similarly arranged on resilient tongues (5011) and are dimensioned such that in the coupled state they fit tightly and resiliently against the inner wall of the sleeve (3).

9. Mixing valve according to any one of claims 2 to 8, characterised in that three symmetrically arranged studs (501) are provided, wherein the studs (501) are made of material having good anti-friction properties and are convex on the outer surface for low-friction engagement against the sleeve (3).

10. Mixing valve according to any one of claims 1 to 9, characterised in that an angled member (40) enclosable by the sleeve (3) is secured to the adjusting lever (21) guided out of the valve cartridge (2), to which angled member the hand lever(4) is fastened by means of an extension (41), the extension (41) being so dimensioned that, on rotation about the centre line (20) of the valve cartridge (2), the sleeve (3), by means of the slot (33), is carried along.

11. Mixing valve according to any one of claims 1 to 10, characterised in that the length of the slot (33) in the sleeve (3) is such that a required swivel movement about the second axis of rotation (200) arranged at right angles to the centre line (20) is permitted for opening and closing the valve cartridge (2), wherein, in the region of the slot (33), the hand lever (4) has one or more projections (42) for masking the slot (33).

12. Mixing valve according to any one of claims 1 to 11, characterised in that the sleeve (3) has a scale (34) on its outer surface for indicating the set mixing ratio.

13. Mixing valve according to any one of claims 1 to 12, characterised in that a sliding ring (6) is arranged between the end face of the sleeve (3) and the end edge (12) of the fitting body (1).

14. Mixing valve according to any one of claims 1 to 13, characterised in that the valve cartridge (2) is pressed with a pressure ring (26) against the fitting body (1), the pressure ring (26) forming with its outer surface one or more rotary guides (261) for the sleeve (3).

15. Mixing valve according to any one of claims 1 to 14, characterised in that the sleeve (3) is manufactured from plastics material and is of hemispherically curved and closed construction (35) at the end of the cylindrical surface region remote from the fitting body (1).

## Revendications

1. Soupape mélangeuse, composée d'un corps de robinet (1) et d'une cartouche de soupape (2) contenant les organes de la soupape et montée sur le corps de robinet (1), dans laquelle :
- un levier à main (4), pouvant être fixé sur un levier de réglage (21, 40) sert à actionner un organe de soupape à deux degrés de liberté, pour définir séparément le rapport du mélange et le débit global traversant,
- le levier à main relié à l'organe mobile de la soupape et qui peut basculer autour de deux axes de rotation (20, 200) perpendiculaires entre eux montés sur la cartouche de soupape (2), sort avec accouplement en rotation sur le côté de l'enveloppe d'une douille (3) pouvant tourner sur le corps de robinet autour du premier axe de rotation (20), tout en étant maintenue avec guidage par rapport à la cartouche (2), cette douille appartenant à un boîtier de tête de levier,
caractérisée en ce que
- la douille (3) est faite d'une seule pièce en appui par une face frontale sur le corps de robinet, ou en prise sur ou à l'intérieur de celui-ci, la face frontale opposée étant essentiellement fermée,
- pour assurer la position axiale de la douille (3) en montée sur le corps de robinet (1), il est prévu sur celle-ci des moyens d'arrêt sur lesquels la douille (3), dans une position de rotation définie, peut être emmanchée axialement, puis tournée alors pour venir dans une position où le levier à main (4) peut être fixé, à travers une fente (33) de la douille (3), sur le levier de réglage (21, 40), la douille étant maintenue axialement sur toute la plage de réglage du mélange effectué par basculement du levier à main (4).

2. Soupape mélangeuse selon la revendication 1,
caractérisée en ce qu'
il est prévu, comme moyen d'arrêt, une liaison à baïonnette comprenant, sur un collet (50) porté par le corps de robinet (1), des taquets (501) en saillie radiale vers l'extérieur et sur la douille (3) des segments annulaires (31) correspondants, en saillie radiale vers l'intérieur et laissant entre eux des espaces libres (32) correspondant aux taquets (501) de sorte que la douille (3) peut être emmanchée sur les taquets et, par rotation axiale, fixée en position emmanchée, tandis que la fente (33) de la douille (3) servant de passage au levier à main (4) est positionnée de manière que cette douille (3) quand le levier à main (4) est monté, se trouve maintenue axialement par la liaison à baïonnette, dans toute la plage de basculement.

3. Soupape mélangeuse selon la revendication 2,
caractérisée en ce que
la fente (33) est positionnée de manière que la douille (3), après emmanchement doit être tournée de 180° pour pouvoir relier le levier à main (4) à la cartouche de soupape (2).

4. Soupape mélangeuse selon les revendications 2 ou 3,
caractérisée en ce que
le collet (50) se trouve sur un élément annulaire qui peut être fixé au corps de robinet (1).

5. Soupape mélangeuse selon la revendication 4,
caractérisée en ce que
l'élément annulaire (5) est, dans un alésage de réception (11) du corps de robinet (1), maintenu bloqué en rotation par un ressort d'ajustage (52), l'élément annulaire (5) comportant des languettes élastiques (51) qui, en position emmanchée sont engagées dans une rainure annulaire (111) de l'alésage de réception (11) et garantissent le maintien de l'élément annulaire (5) en position emmanchée.

6. Soupape mélangeuse selon la revendication 5,
caractérisée en ce que
la rainure annulaire (111) présente un chanfrein (1111) d'environ 45° et les languettes élastiques (51) sont constituées de manière que l'élément annulaire (5) avec ses segments (31) pousse élastiquement la douille (3) contre un bord frontal périphérique (12) du corps de robinet (1) de manière à créer un appui étanche.

7. Soupape mélangeuse selon les revendications 5 ou 6,
caractérisée en ce que
la cartouche de soupape (2) est montée dans l'alésage de réception (11) coaxialement à l'élément annulaire (5) qui est dimensionné de manière qu'après emmanchement de cet élément (5) puis montage de la cartouche (2), les languettes élastiques (51) se trouvent verrouillées dans leur position d'arrêt par l'enveloppe externe de la cartouche (2).

8. Soupape mélangeuse selon l'une des revendications 2 à 7,
caractérisée en ce que
les taquets (501) sont montés également sur des languettes élastiques (5011) et sont dimensionnés de façon à être en position emmanchée, appliqués élastiquement sur la paroi interne de la douille (3).

9. Soupape mélangeuse selon l'une des revendications 2 à 8,
caractérisée en ce qu'
il est prévu trois taquets (501) disposés symétriquement, qui sont faits d'un matériau glissant bien et présentent une surface externe bombée de manière à être en appui sur la douille (3) avec peu de frottement.

10. Soupape mélangeuse selon l'une des revendications 1 à 9,
caractérisée en ce que
sur le levier de réglage (21) sortant de la cartouche de soupape (2), est fixée une pièce en angle (40) que peut envelopper la douille (3) et sur laquelle est fixé le levier à main (4) par un appendice (41) qui est dimensionné de manière que la douille (3) se trouve entraînée par la fente (33) lors d'une rotation de la cartouche (2) autour de son axe central (20).

11. Soupape mélangeuse selon l'une des revendications 1 à 10,
caractérisée en ce que
la fente (33) de la douille (3) a une longueur qui permet le mouvement de basculement autour du second axe de rotation (200) perpendiculaire à l'axe central (20), qui est nécessaire pour ouvrir ou fermer la cartouche de soupape (2), le levier à main (4) présentant, dans la zone de la fente (33) une ou plusieurs parties en saillie (42) pour recouvrir la fente (33).

12. Soupape mélangeuse selon l'une des revendications 1 à 11,
caractérisée en ce que
la douille (3) porte sur son enveloppe externe une échelle (34) servant à indiquer le rapport de mélange qui a été réglé.

13. Soupape mélangeuse selon l'une des revendications 1 à 12,
caractérisée en ce qu'
une bague de glissement (6) est intercalée entre la face frontale de la douille (3) et le bord frontal (12) du corps de robinet (1).

14. Soupape mélangeuse selon l'une des revendications 1 à 13,
caractérisée en ce que
la cartouche de soupape (2) est appliquée par une bague de pression (26) contre le corps de robinet (1), cette bague constituant par son enveloppe externe un ou plusieurs guidages de rotation (261) de la douille (3).

15. Soupape mélangeuse selon l'une des revendications 1 à 14,
caractérisée en ce que
la douille (3) est en matière plastique et la face frontale de sa partie cylindrique située à l'opposé du corps de robinet (1) est fermée par une partie bombée (35) en forme de demi-sphère.
